# FASCICULE DE BREVET EUROPEEN

(11) **EP 2 193 943 B1**
(45) Date de publication et mention de la délivrance du brevet: **19.10.2011**
(21) Numéro de dépôt: 09175134.7
(22) Date de dépôt: 05.11.2009
(51) Int. Cl.: B60J 1/20, B62D 35/00

(54) **Ensemble arriere de vehicule**
Heckteil eines Fahrzeugs
Rear assembly of a vehicle

(30) Priorité: 04.12.2008 FR 0858282
(43) Date de publication de la demande: 09.06.2010
(73) Titulaire: Peugeot Citroën Automobiles SA, 78140 Vélizy-Villacoublay (FR)
(72) Inventeur: Roumier, Nicolas, 92130, ISSY LES MOULINEAUX (FR); Laviolette, Julien, 78330, FONTENAY LE FLEURY (FR)
(74) Mandataire: Allain, Laurent

(56) Documents cités:
- JP-A- 10 167 126
- JP-A- 11 152 065
- JP-U- 63 014 483

## Description

L'invention concerne les ensembles arrières de véhicule comprenant un ouvrant arrière et un élément de carrosserie rapporté sur l'ouvrant arrière de véhicule. L'invention concerne également un procédé de montage de tels ensembles arrières de véhicule.

De façon conventionnelle, un véhicule comprend un ensemble arrière de véhicule comprenant un ouvrant arrière donnant accès à la partie arrière de l'habitacle du véhicule dans sa position ouverte et un élément de carrosserie tel qu'un becquet rapporté au dessus de l'ouvrant arrière destiné à améliorer les performances aérodynamiques et l'esthétique du véhicule.

L'ouvrant arrière est monté pivotant sur le pavillon (toit) du véhicule grâce à des moyens d'articulation, de sorte qu'il peut être déplacé entre une position de fermeture et la position d'ouverture, par déplacement angulaire autour de ces moyens d'articulation.

Quant au becquet, certaines cinématiques de montage imposent qu'il présente deux positions, à savoir une position dite de montage afin de permettre le branchement d'équipements fonctionnels tels que des connexions électriques, un équipement lave glace ou des feux stop, et une position finale dite montée.

Pour que le becquet passe de la position de montage à la position montée, il est prévu une cinématique de rotation de ce becquet autour de l'axe de pivotement des moyens d'articulation précités et une fixation du becquet sur la face extérieure de l'ouvrant arrière par des moyens de vissage.

Par ailleurs, pour assurer les jeux et affleurements corrects entre le becquet et le reste du véhicule, le vissage du becquet sur la face extérieure de l'ouvrant devrait s'effectuer, d'une part, en divers points de fixation répartis en amont du becquet pour assurer son placage sur l'ouvrant arrière et, d'autre part, en plusieurs points de fixation répartis le long de l'axe de pivotement des moyens d'articulation.

Cependant, une telle cinématique de montage du becquet sur l'ouvrant arrière du véhicule présente un certain nombre de problèmes.

En premier lieu, on a constaté que fixer le becquet sur la face extérieure de l'ouvrant arrière dans la zone centrale de l'ouvrant arrière autour du plan de symétrie longitudinal du véhicule était impossible.

En effet, cette zone étant dédiée à recevoir les équipements fonctionnels ainsi que le garnissage d'étanchéité de l'ouvrant arrière, le faible espace disponible restant ne permettait pas de venir fixer le becquet dans cette zone.

Or, la conséquence directe d'un tel problème est un affleurement entre le becquet et le pavillon du véhicule non maîtrisé c'est-à-dire que le becquet présente un sur-galbe par rapport au pavillon du à sa souplesse.

De plus, ce problème de sur-galbe du becquet entraîne, à l'ouverture de l'ouvrant arrière, une possible dégradation du pavillon voire un risque de destruction du becquet car le becquet vient buter dans le pavillon. Le document JP 63-14483 U décrit un ensemble arrière de véhicule selon le préambule de la revendication 1 et un procédé de montage selon le préambule de la revendication 1.

Un but de la présente invention est de pallier les problèmes définis ci-dessus.

Ainsi, un but de la présente invention est de proposer une solution alternative à la fixation du becquet dans la zone centrale de la face extérieure de l'ouvrant arrière autour du plan de symétrie longitudinal du véhicule tout en conservant un placage correct du becquet sur l'ouvrant arrière du véhicule.

Il est également désirable de proposer un ensemble arrière de véhicule n'offrant ni défaut d'affleurement entre le becquet et le pavillon du véhicule ni risque de dégradation du becquet ou du pavillon lors de l'ouverture de l'ouvrant en phase de montage ou en phase d'utilisation.

A cet effet, la présente invention propose un ensemble arrière de véhicule comprenant un ouvrant arrière monté pivotant autour d'un axe transversal sur une partie arrière du véhicule et un élément de carrosserie destiné à être fixé sur l'ouvrant arrière remarquable en ce qu'il comprend des moyens pour fixer l'élément de carrosserie sur l'ouvrant arrière par pivotement d'une position de montage à une position intermédiaire puis par glissement de la position intermédiaire à une position montée sur l'ouvrant arrière, les moyens pour fixer l'élément de carrosserie sur l'ouvrant arrière comprenant des moyens d'encliquetage complémentaires agencés sur l'élément de carrosserie et sur l'ouvrant arrière et propres à fixer l'élément de carrosserie sur l'ouvrant arrière dans sa position montée.

Grâce à la présente invention, les moyens pour fixer l'élément de carrosserie sur l'ouvrant arrière permettent de s'affranchir de la fixation de l'élément de carrosserie dans la zone centrale de la face extérieure de l'ouvrant arrière autour du plan de symétrie longitudinal du véhicule tout en conservant un placage correct de l'élément de carrosserie sur l'ouvrant arrière du véhicule.

Ainsi, en assurant le placage correct de l'élément de carrosserie dans cette zone, on évite le sur-galbe de ce dernier dans sa position montée par rapport au pavillon du véhicule ainsi que toute dégradation du pavillon ou de l'élément qui en découlerait suite à l'ouverture de l'ouvrant arrière.

Selon des modes particuliers de réalisation, l'ensemble arrière de véhicule peut comprendre l'une ou plusieurs des caractéristiques suivantes, prises isolément ou selon toutes les combinaisons techniquement possibles :
- lesdits moyens pour fixer l'élément de carrosserie sur l'ouvrant arrière comprennent des moyens d'engagement mutuel entre l'élément de carrosserie et des moyens d'articulation auxquels est fixé l'ouvrant arrière permettant le pivotement dudit élément de la position de montage à la position intermédiaire puis le glissement de la position intermédiaire à la position montée sur l'ouvrant arrière;
- les moyens d'engagement mutuel entre l'élément de carrosserie et les moyens d'articulation auxquels est fixé l'ouvrant arrière comprennent un organe de guidage formé sur l'élément de carrosserie et destiné à coopérer avec un pion coaxial avec l'axe transversal d'une charnière;
- l'organe de guidage est une rainure de guidage adaptée pour recevoir le pion de la charnière et guider l'élément de carrosserie lors de son pivotement autour de l'axe transversal de la charnière de la position de montage à la position intermédiaire puis lors de son glissement par rapport audit axe de la position intermédiaire à la position montée;

- les dimensions de la rainure de guidage sont adaptées pour laisser un jeu entre le fond de la rainure et le pion de la charnière reçu dans ladite rainure lorsque l'élément de carrosserie est en position de montage;
- les moyens d'encliquetage comprennent au moins une patte de fixation sur l'ouvrant arrière agencée sur l'élément de carrosserie, ladite patte de fixation étant destinée, d'une part, à venir en contact avec une nervure formée sur la face intérieure de l'ouvrant lorsque l'élément de carrosserie passe de la position intermédiaire à la position montée et, d'autre part, à être retenue par une action d'encliquetage sur ladite nervure;
- ladite patte de fixation s'étend transversalement à l'élément de carrosserie et présente un profil dans un plan transversal à l'axe transversal de la charnière comprenant une encoche destinée à recevoir la nervure formée sur l'ouvrant ;
- l'élément de carrosserie est un becquet.

L'invention prévoit, en outre, un procédé de montage d'un ensemble arrière de véhicule présentant un ouvrant arrière monté pivotant autour d'un axe transversal sur une partie arrière du véhicule et un élément de carrosserie destiné à recouvrir partiellement l'ouvrant arrière **caractérisé en ce qu'**il comprend une étape de fixation de l'élément de carrosserie sur l'ouvrant arrière par pivotement du élément d'une position de montage à une position intermédiaire puis par glissement de l'élément de la position intermédiaire à une position montée sur l'ouvrant arrière et par encliquetage de l'élément de carrosserie sur l'ouvrant arrière de façon à fixer l'élément de carrosserie sur l'ouvrant arrière dans sa position montée.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 représente une vue de la partie arrière d'un véhicule automobile;
- la figure 2 représente une vue en perspective de dessus d'un ensemble arrière de véhicule selon un mode de réalisation de la présente invention, en position de montage;
- la figure 3 représente une vue latérale en perspective du ensemble arrière de véhicule de la figure 2, en position de montage;
- la figure 4 représente une vue en perspective de dessous du ensemble arrière de véhicule de la figure 2, en position intermédiaire.

Sur l'ensemble des figures, on definit un système d'axes X, Y, Z attaché au véhicule. De façon conventionnelle, l'axe X représente l'axe longitudinal de roulement du véhicule orienté d'arrière en avant, l'axe Y représente l'axe transversal du véhicule orienté de droite à gauche, et l'axe Z représente l'axe vertical du véhicule orienté de bas en haut.

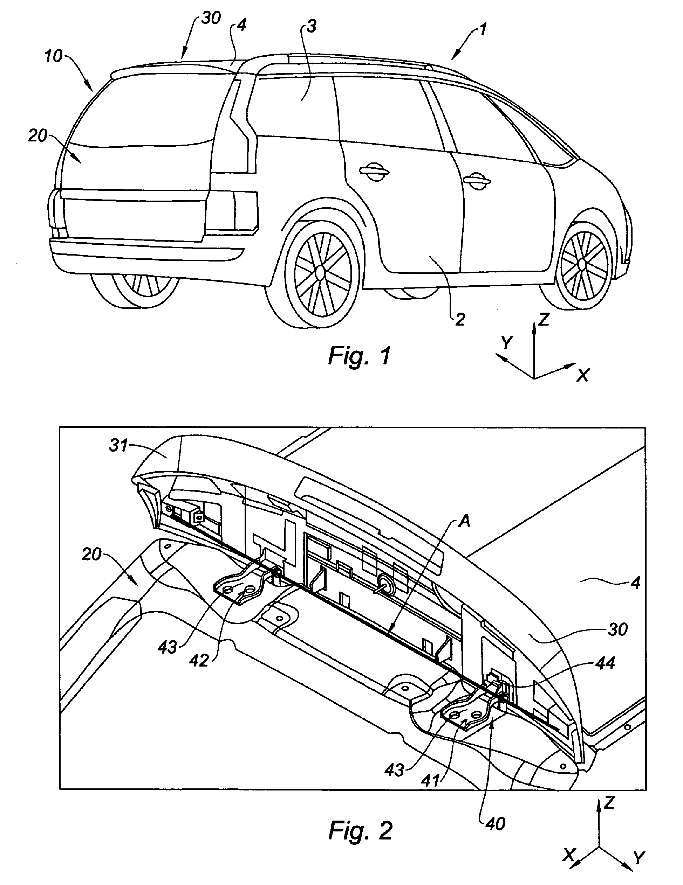

Sur la figure 1, on a représenté la partie arrière d'un véhicule automobile désignée de manière générale par la référence 1.

De façon générale, le véhicule automobile 1 comporte une carrosserie 2 délimitant un habitacle 3.

L'habitacle 3 est délimité, entre autres, par un plancher (non visible), un toit ou pavillon 4 et, à sa partie postérieure, par un ensemble arrière 10 présentant un ouvrant arrière du type hayon 20 et un élément de carrosserie tel qu'un becquet 30 destiné à être rapporté sur l'ouvrant arrière 20.

Tel qu'illustré sur la figure 2, l'ouvrant arrière 20 est monté pivotant autour d'un axe transversal de pivotement A sur la partie arrière du véhicule 1.

Plus précisément, des moyens d'articulation 40 présentant un axe transversal de pivotement A sont fixés sur l'ouvrant arrière 20 et le pavillon 4 du véhicule 1 de sorte que l'ouvrant arrière 20 peut être déplacé entre une position de fermeture de la partie arrière de l'habitacle 3 et une position d'ouverture maximale, par déplacement angulaire autour de l'axe de pivotement A, donnant accès à la partie arrière dudit habitacle 3.

De préférence, l'ouvrant arrière 20 est déplaçable entre ces deux positions grâce à plusieurs charnières 41, 42 réparties le long de son bord transversal supérieur.

Chacune de ces charnières 41,42 présentent un charnon 43 destiné à être fixé sur la face extérieure de l'ouvrant arrière 20 et un charnon 44 destiné à être fixé sur le pavillon 4 du véhicule 1. Ces moyens d'articulation 40 sont connus en soi et ne seront pas décrits plus en détail par la suite.

Concernant le becquet 30, il se présente sous la forme d'une pièce 31 par exemple en plastique de profil dans un plan XZ en forme générale de J s'étendant le long de l'axe transversal Y du véhicule 1.

Ce becquet 30 est destiné à être fixé par l'un de ses bords longitudinaux au bord transversal supérieur de l'ouvrant arrière 20 du véhicule 1 tandis que le bord longitudinal opposé est libre.

Cette pièce 31 présente deux positions différentes, à savoir une position dite de montage et une position dite montée sur l'ouvrant arrière 20.

La position dite de montage illustrée sur la figure 2 correspond à une position du becquet 30 en position verticale c'est-à-dire sensiblement perpendiculaire par rapport au pavillon 4 de façon à permettre d'installer les équipements fonctionnels destinés à être placés sur la face extérieure de l'ouvrant arrière 20 tels que des feux stop ou un équipement de lave glace.

Quant à la position dite montée illustrée sur la figure 1, elle est définie par la position que le becquet 30 présente lorsqu'il est définitivement fixé sur l'ouvrant du véhicule 20 c'est-à-dire lorsqu'il repose sur la face extérieure de l'ouvrant arrière 20, et se retrouve dans le prolongement du pavillon 4.

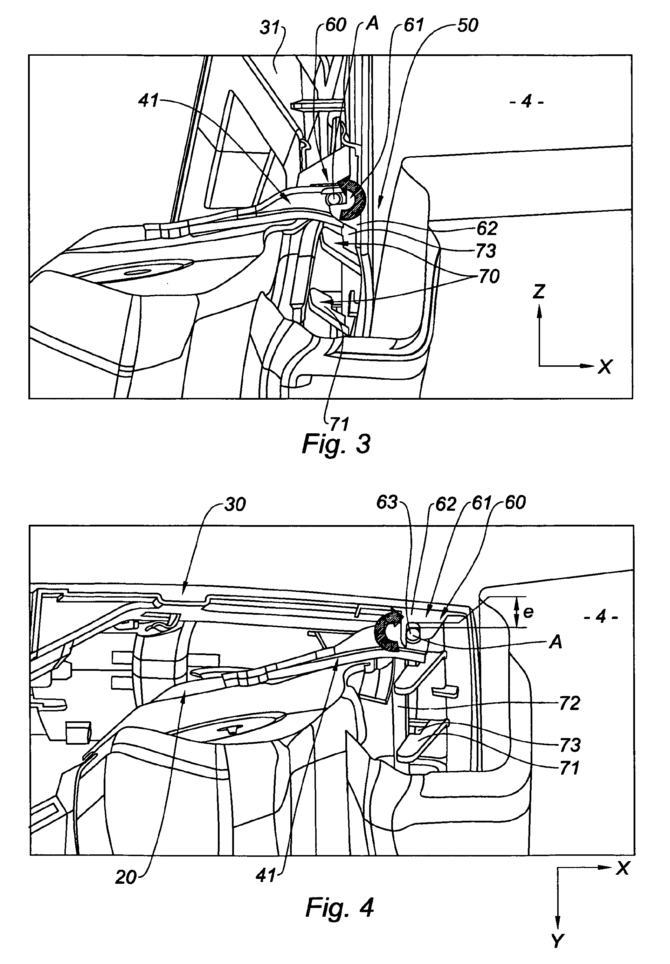

Selon l'invention, tel qu'illustré sur la figure 3, l'ensemble arrière 10 de véhicule comprend des moyens 50 pour fixer le becquet 30 sur l'ouvrant arrière 20 par pivotement de la position de montage à une position intermédiaire puis par glissement de la position intermédiaire à la position montée sur l'ouvrant arrière 20.

Avantageusement, les moyens 50 pour fixer le becquet 30 sur l'ouvrant arrière 20 comprennent d'une part, des moyens d'engagement mutuel 60 entre le becquet 30 et les moyens d'articulation 40 permettant le pivotement du becquet 30 autour de l'axe de pivotement A de la position de montage à la position intermédiaire puis le glissement et le pivotement autour de l'axe de pivotement A de la position intermédiaire à la position montée sur l'ouvrant arrière 20.

D'autre part, les moyens 50 pour fixer le becquet 30 sur l'ouvrant arrière comprennent, en outre, des moyens d'encliquetage 70 complémentaires agencés sur le becquet 30 et sur l'ouvrant arrière 20 et propres à fixer le becquet 30 dans sa position montée sur la face intérieure de l'ouvrant arrière 20 c'est-à-dire la face dirigée du coté de l'habitacle 3 du véhicule 1 : en d'autres termes ces moyens d'encliquetage 70 traversent l'espace libre entre l'ouvrant arrière 20 et le pavillon 4 du véhicule 1.

Ainsi, les moyens 50 pour fixer le becquet 30 sur l'ouvrant arrière 20 permettent de s'affranchir de la fixation du becquet 30 dans la zone centrale de la face extérieure de l'ouvrant arrière 20 autour du plan de symétrie longitudinal du véhicule 1 en proposant une solution alternative, à savoir une fixation du becquet 30 sur la face intérieure de l'ouvrant arrière 20 où l'espace disponible est plus important que sur la face extérieure de l'ouvrant 20 comme cela sera décrit plus en détail par la suite.

Le placage correct du becquet 30 étant ainsi assuré, on évite le sur-galbe du becquet 30 dans sa position montée par rapport au pavillon 4 ainsi que toute dégradation du pavillon 4 ou du becquet 30 qui en découlerait suite à l'ouverture de l'ouvrant arrière 20.

En s'appuyant sur les figures 2 à 4, les moyens d'engagement mutuel 60 entre le becquet 30 et les moyens d'articulation 40 comprennent des organes de guidage 61 formés sur le becquet 30 et destinés à coopérer avec les pions coaxiaux avec l'axe de pivotement A de chaque charnière 41,42 de part et d'autre de chaque charnière 41,42.

Chaque organe de guidage 61 présente deux pièces 62 planes et parallèles s'étendant transversalement au becquet 30 à partir de son bord longitudinal de fixation sur sa face intérieure, à savoir la face destinée à venir en vis-à-vis de la face extérieure de l'ouvrant arrière 20.

Chacune des pièces 62 présente une rainure de guidage 63 adaptée pour recevoir un pion d'une charnière 41,42, respectivement, de part et d'autre de la charnière 41,42.

Ces rainures de guidage 63 vont guider le becquet 30 lors de son pivotement autour de l'axe de pivotement A des charnières 41,42 de la position de montage, visible sur les figures 2 et 3, à la position intermédiaire, visible sur la figure 4, puis lors de son glissement par rapport audit axe A de la position intermédiaire à la position montée.

Ainsi, chacune des rainures de guidage 63 se présente sous la forme d'un U dont les dimensions des deux branches parallèles sont adaptées pour laisser un jeu e entre le fond de la rainure de guidage 63 et le pion de la charnière 41,42 lorsque ce dernier est reçu dans ladite rainure 63 et que le becquet 30 est en position de montage.

Lors du montage, le becquet 30 est installé grâce aux rainures de guidage 63 sur les pions de chaque charnière 41,42 dans sa position de montage.

Les rainures de guidage 63 s'étendant suivant l'axe longitudinal X, la coopération entre chaque rainure de guidage 63 et chaque pion de charnière 41, 42 permet de maintenir le becquet 30 en position de montage.

Ensuite, la coopération entre chaque rainure de guidage 63 et chaque pion de charnière 41, 42 permet de faire pivoter le becquet 30 autour de l'axe de pivotement A d'un déplacement angulaire prédéterminé de la position de montage des figures 2 et 3 à la position intermédiaire de la figure 4.

Dans cette position intermédiaire du becquet 30, le déplacement angulaire prédéterminé a permis d'orienter chaque rainure de guidage 63 du becquet 30 suivant l'axe vertical Z.

Le jeu e laissé entre le fond de chaque rainure de guidage 63 et les pions des charnières 41,42 dans la position de montage du becquet 30 autorise alors le glissement du becquet 30 suivant l'axe vertical Z vers le bas du véhicule 1 jusqu'à ce que chaque pion vienne en butée contre le fond de chaque rainure de guidage 63.

La translation du becquet 30 permet aux moyens d'encliquetage 70 du becquet 30 de traverser un espace libre prévu entre l'ouvrant arrière 20 et le pavillon 4 du véhicule 1.

Ils passent ainsi sous l'ouvrant arrière 20 du véhicule 1 c'est-à-dire du coté de la face intérieure de l'ouvrant arrière 20 pour venir fixer, avantageusement, le becquet 30 sur cette face intérieure et assurer ainsi un placage correct du becquet 30 sur l'ouvrant arrière 20.

Avantageusement, les moyens d'encliquetage 70 comprennent au moins une patte de fixation 71 sur l'ouvrant arrière 20 agencée sur le becquet 30.

Dans l'exemple non limitatif illustré sur les figures 3 et 4, le becquet 30 comprend deux pattes de fixation 71 parallèles.

Chaque patte de fixation 71 est destinée, d'une part, à venir en contact avec une nervure 72 en saillie sur la face intérieure de l'ouvrant arrière 20 lorsque le becquet 30 passe de la position intermédiaire à la position montée et, d'autre part, à être retenue par une action d'encliquetage sur ladite nervure 72 en position montée du becquet 30.

Dans un exemple non limitatif, la nervure 72 s'étend le long de l'axe transversal Y sur la face intérieure de l'ouvrant arrière 20.

De plus, chaque patte de fixation 71 a une forme adaptée pour permettre son passage dans l'espace libre prévu entre l'ouvrant arrière 20 et le pavillon 4 du véhicule 1 lorsque le becquet 30 passe de la position de montage à la position intermédiaire.

Ainsi, chaque patte de fixation 71 s'étend transversalement au becquet 30 et présente un profil dans un plan transversal comprenant une encoche 73 destinée à recevoir la nervure 72 de l'ouvrant arrière 20 et à se fixer par une action d'encliquetage sur cette dernière.

Le procédé de montage du becquet 30 sur l'ouvrant arrière 20 de l'ensemble arrière 10 du véhicule 1 est le suivant.

En premier lieu, l'ouvrant arrière 20 étant fermé, on positionne le becquet 30 dans la position de montage représentée aux figures 2 et 3 c'est-à-dire perpendiculairement au pavillon 4 du véhicule 1 en insérant les pions des charnières 41,42 dans les rainures de guidage 62 associées du becquet 30.

Ensuite, on fait pivoter le becquet 30 autour de l'axe de pivotement A des charnières 41,42 pour atteindre une position où les rainures de guidage 63 se trouvent sensiblement parallèles à l'axe vertical Z. Le becquet 30 est alors en position intermédiaire, telle que visible sur la figure 4.

Grace au jeu e existant entre le fond des rainures de guidage 63 et les pions des charnières 41,42, le becquet 30 est guidé en translation jusqu'à la butée des pions dans le fond des rainures 63.

Au cours de ce glissement, les moyens d'encliquetage 70 du becquet 30 traversent l'espace libre entre l'ouvrant arrière 20 et le pavillon 4 pour passer du côté de la face intérieure de l'ouvrant arrière 20 et viennent s'encliqueter sur les moyens d'encliquetage complémentaires de l'ouvrant 20.

Plus précisément, les pattes de fixation 71 viennent s'encliqueter sur la nervure 72 prévue à cet effet sur l'ouvrant arrière 20 lors du glissement.

Le becquet 30 est alors en position montée et solidaire de l'ouvrant arrière 20.

Dans une dernière étape, on ouvre l'ouvrant arrière 20 afin de venir visser le becquet 30 par des moyens adaptés sur l'ouvrant arrière 20 par l'intérieur en des points de fixation déterminés.

Ce procédé de montage garantit le placage correct du becquet 30 sur l'ouvrant arrière 20.

Il garantit également l'absence de défaut d'affleurement entre le becquet 30 et le pavillon 4 avant l'ouverture de l'ouvrant arrière 20 et la fixation par des moyens de vissage du becquet 30.

Ainsi, à l'ouverture de l'ouvrant arrière 20, on supprime le risque de déformation du pavillon 4 ou de destruction du becquet 30.

Par ailleurs, le procédé de montage est simple à mettre en oeuvre et rapide. En effet, il ne nécessite ni temps ni moyens de fixation supplémentaires par rapport aux procédés de montage connus d'un becquet 30 sur un ouvrant arrière 20.

## Revendications

1. Ensemble arrière (10) de véhicule présentant un ouvrant arrière (20) monté pivotant autour d'un axe transversal sur une partie arrière du véhicule et un élément de carrosserie (30) destiné à être rapporté sur l'ouvrant arrière (20), ensemble comprenant des moyens (50) pour fixer l'élément de carrosserie (30) sur l'ouvrant arrière (20) par passage d'une position de montage à une position montée sur l'ouvrant arrière (20), **caractérisé en ce que** lesdits moyens (50) permettent le pivotement de la position de montage à une position intermédiaire et le glissement de la position intermédiaire à la position montée sur l'ouvrant arrière (20), les moyens (50) pour fixer l'élément de carrosserie (30) sur l'ouvrant arrière (20) comprenant des moyens d'encliquetage (70) complémentaires agencés sur l'élément de carrosserie (30) et sur l'ouvrant arrière (20) et propres à fixer l'élément de carrosserie (30) sur l'ouvrant arrière ( 20) dans sa position montée.

2. Ensemble arrière (10) de véhicule selon la revendication 1 **caractérisé en ce que** lesdits moyens (50) pour fixer l'élément de carrosserie (30) sur l'ouvrant arrière (20) comprennent des moyens d'engagement mutuel (60) entre l'élément de carrosserie (30) et des moyens d'articulation (41,42) auxquels est fixé l'ouvrant arrière (20) permettant le pivotement dudit élément de la position de montage à la position intermédiaire puis le glissement de la position intermédiaire à la position montée sur l'ouvrant arrière (20).

3. Ensemble arrière (10) de véhicule selon la revendication 2 **caractérisé en ce que** les moyens d'engagement mutuel (60) entre l'élément de carrosserie (30) et les moyens d'articulation (41,42) auxquels est fixé l'ouvrant arrière (20) comprennent un organe de guidage formé sur l'élément de carrosserie (30) et destiné à coopérer avec un pion un pion coaxial avec l'axe transversal d'une charnière (41,42).

4. Ensemble arrière de véhicule selon la revendication 3 **caractérisé en ce que** l'organe de guidage est une rainure de guidage (63) adaptée pour recevoir le pion de la charnière (41,42) et guider l'élément de carrosserie (30) lors de son pivotement autour de l'axe transversal de la charnière (41,42) de la position de montage à la position intermédiaire puis lors de son glissement par rapport audit axe de la position intermédiaire à la position montée.

5. Ensemble arrière (10) de véhicule selon la revendication 4 **caractérisé en ce que** les dimensions de la rainure de guidage (63) sont adaptées pour laisser un jeu entre le fond de la rainure (63) et le pion de la charnière (41,42) reçu dans ladite rainure (63) lorsque l'élément de carrosserie (20) est en position de montage.

6. Ensemble arrière (10) de véhicule selon l'une des revendications précédentes **caractérisé en ce que** les moyens d'encliquetage (70) comprennent au moins une patte de fixation (71) sur l'ouvrant arrière (20) agencée sur l'élément de carrosserie (30), ladite patte de fixation (71) étant destinée, d'une part, à venir en contact avec une nervure (72) formée sur la face intérieure de l'ouvrant (20) lorsque l'élément de carrosserie (30) passe de la position intermédiaire à la position montée et, d'autre part, à être retenue par une action d'encliquetage sur ladite nervure (72).

7. Ensemble arrière (10) de véhicule selon la revendication 6 **caractérisé en ce que** ladite patte de fixation (71) s'étend transversalement à l'élément de carrosserie (30) et présente un profil dans un plan transversal à l'axe transversal de la charnière (41,42) comprenant une encoche destinée à recevoir la nervure (72) formée sur l'ouvrant arrière (20).

8. Ensemble arrière de véhicule selon l'une des revendications précédentes **caractérisé en ce que** l'élément de carrosserie (30) est un becquet.

9. Procédé de montage d'un ensemble arrière (10) de véhicule présentant un ouvrant arrière (20) monté pivotant autour d'un axe transversal sur une partie arrière du véhicule et un élément de carrosserie (30) destiné à recouvrir partiellement l'ouvrant arrière (20), procédé comprenant une position de montage et une position montée de l'élément de carosserie (30) sur l'ouvrant arrière (20), **caractérisé en ce qu'**il comprend une étape de fixation de l'élément de carrosserie (30) sur l'ouvrant arrière (20) par pivotement de l'élément (30) de la position de montage à une position intermédiaire, par glissement de l'élément (30) de la position intermédiaire à la position montée sur l'ouvrant arrière (20) puis par encliquetage de l'élément de carrosserie (30) sur l'ouvrant arrière (20) de façon à fixer l'élément de carrosserie (30) sur l'ouvrant arrière (20) dans sa position montée.

## Claims

1. Vehicle rear assembly (10) having a rear door leaf (20) pivotally mounted about a transverse axis on a rear part of the vehicle and a body element (30) intended to be joined onto the rear door leaf (20), said assembly comprising means (50) for fixing the body element (30) on the rear door leaf (20) by movement from a mounting position to a mounted position on the rear door leaf (20), **characterised in that** said means (50) allow the pivoting from the mounting position to an intermediate position and the sliding from the intermediate position to the mounted position on the rear door leaf (20), the means (50) for fixing the body element (30) on the rear door leaf (20) comprising complementary locking means (70) arranged on the body element (30) and on the rear door leaf (20) and able to fix the body element (30) on the rear door leaf (20) in the mounted position thereof.

2. Vehicle rear assembly (10) according to claim 1, **characterised in that** said means (50) for fixing the body element (30) on the rear door leaf (20) comprise mutual engagement means (60) between the body element (30) and articulation means (41, 42) to which the rear door leaf (20) is fixed, allowing the pivoting of said element from the mounting position to the intermediate position and then the sliding from the intermediate position to the mounted position on the rear door leaf (20).

3. Vehicle rear assembly (10) according to claim 2, **characterised in that** the mutual engagement means (60) between the body element (30) and the articulation means (41, 42) to which the rear door leaf (20) is fixed comprise a guide member formed on the body element (30) and intended to cooperate with a pin which is coaxial with the transverse axis of a hinge (41, 42).

4. Vehicle rear assembly according to claim 3, **characterised in that** the guide member is a guide groove (63) adapted to receive the pin of the hinge (41, 42) and guide the body element (30), during pivoting thereof about the transverse axis of the hinge (41, 42), from the mounting position to the intermediate position and then, during sliding thereof in relation to said axis, from the intermediate position to the mounted position.

5. Vehicle rear assembly (10) according to claim 4, **characterised in that** the dimensions of the guide groove (63) are adapted to leave clearance between the base of the groove (63) and the pin of the hinge (41, 42), which pin is received in said groove (63) when the body element (20) is in a mounting position.

6. Vehicle rear assembly (10) according to any one of the preceding claims, **characterised in that** the locking means (70) comprise at least a fixing tab (71) on the rear door leaf (20) arranged on the body element (30), said fixing tab (71) being intended, on the one hand, to come into contact with a rib (72) formed on the inner face of the door leaf (20) when the body element (30) moves from the intermediate position to the mounted position and, on the other hand, to be retained by a locking action on said rib (72).

7. Vehicle rear assembly (10) according to claim 6, **characterised in that** said fixing tab (71) extends transversely to the body element (30) and has a profile in a plane which is transverse to the transverse axis of the hinge (41, 42) comprising a notch intended to receive the rib (72) formed on the rear door leaf (20).

8. Vehicle rear assembly according to any one of the preceding claims, **characterised in that** the body element (30) is a spoiler.

9. Method for mounting a vehicle rear assembly (10) having a rear door leaf (20) pivotally mounted about a transverse axis on a rear part of the vehicle and a body element (30) intended to cover the rear door leaf (20) in part, said method comprising a mounting position and a mounted position of the body element (30) on the rear door leaf (20), **characterised in that** it comprises a step of fixing the body element (30) on the rear door leaf (20) by pivoting the element from the mounting position to an intermediate position, by sliding the element (30) from the intermediate position to the mounted position on the rear door leaf (20), and then locking the body element (30) on the rear door leaf (20) so as to fix the body element (30) on the rear door leaf (20) in the mounted position thereof.

## Patentansprüche

1. Fahrzeugheckanordnung (10), das ein hinteres Öffnungselement (20), das um eine Querachse auf einem hinteren Teil des Fahrzeugs drehbar gelagert ist, und ein Karosserieelement (30), das dazu gedacht ist, an dem hinteren Öffnungselement (20) angesetzt zu werden, aufweist, wobei die Anordnung Mittel (50) zum Befestigen des Karosserieelements (30) an dem hinteren Öffnungselement (20) durch den Übergang von einer Montageposition in eine montierte Position an dem hinteren Öffnungselement (20) umfasst, **dadurch gekennzeichnet, dass** die Mittel (50) das Verschwenken von der Montageposition in eine Zwischenposition und das Gleiten von der Zwischenposition in die montierte Position an dem hinteren Öffnungselement (20) ermöglichen, wobei die Mittel (50) zum Befestigen des Karosserieelements (30) an dem hinteren Öffnungselement (20) sich ergänzende Einrastmittel (70) umfassen, die an dem Karosserieelement (30) und an dem hinteren Öffnungselement (20) angeordnet sind und dazu geeignet sind, das Karosserieelement (30) an dem hinteren Öffnungselement (20) in seiner montierten Position zu befestigen.

2. Fahrzeugheckanordnung (10) nach Anspruch 1, **dadurch gekennzeichnet, dass** die Mittel (50) zum Befestigen des Karosserieelements (30) an dem hinteren Öffnungselement (20) gegenseitige Eingriffsmittel (60) zwischen dem Karosserieelement (30) und Gelenkmitteln (41, 42), an denen das hintere Öffnungselement (20) befestigt ist, umfassen, wodurch das Verschwenken des Elements von der Montageposition in die Zwischenposition und dann das Gleiten von der Zwischenposition in die montierte Position an dem hinteren Öffnungselement (20) ermöglicht werden.

3. Fahrzeugheckanordnung (10) nach Anspruch 2, **dadurch gekennzeichnet, dass** die gegenseitigen Eingriffsmittel (60) zwischen dem Karosserieelement (30) und den Gelenkmitteln (41, 42), an denen das hintere Öffnungselement (20) befestigt ist, ein Führungsorgan umfassen, das an dem Karosserieelement (30) gebildet ist und dazu gedacht ist, mit einem Stift zusammenzuwirken, der zu der Querachse eines Scharniers (41, 42) koaxial ist.

4. Fahrzeugheckanordnung nach Anspruch 3, **dadurch gekennzeichnet, dass** das Führungsorgan eine Führungsnut (63) ist, die dazu geeignet ist, den Stift des Scharniers (41, 42) aufzunehmen und das Karosserieelement (30) bei seiner Verschwenkung um die Querachse des Scharniers (41, 42) von der Montageposition in die Zwischenposition und dann bei seinem Gleiten im Verhältnis zur Achse von der Zwischenposition in die montierte Position zu führen.

5. Fahrzeugheckanordnung (10) nach Anspruch 4, **dadurch gekennzeichnet, dass** die Abmessungen der Führungsnut (63) dazu geeignet sind, um zwischen dem Boden der Nut (63) und dem Stift des Scharniers (41, 42), der in der Nut (63) aufgenommen wird, wenn das Karosserieelement (20) sich in der Montageposition befindet, Spiel zu lassen.

6. Fahrzeugheckanordnung (10) nach einem der vorhergehenden Ansprüche, **dadurch gekennzeichnet, dass** die Einrastmittel (70) mindestens eine Befestigungslasche (71) an dem hinteren Öffnungselement (20) umfassen, die auf dem Karosserieelement (30) angeordnet ist, wobei die Befestigungslasche (71) einerseits dazu gedacht ist, mit einer Rippe (72) in Berührung zu kommen, die an der Innenseite des Öffnungselements (20) gebildet ist, wenn das Karosserieelement (30) von der Zwischenposition in die montierte Position übergeht, und andererseits dazu gedacht ist, durch eine Rasteinwirkung auf die Rippe (72) festgehalten zu werden.

7. Fahrzeugheckanordnung (10) nach Anspruch 6, **dadurch gekennzeichnet, dass** die Befestigungslasche (71) sich quer zum Karosserieelement (30) erstreckt und ein Profil in einer Ebene, die zur Querachse des Scharniers (41, 42) querliegt, aufweist, das eine Einkerbung umfasst, die dazu gedacht ist, die Rippe (72) aufzunehmen, die an dem hinteren Öffnungselement (20) gebildet ist.

8. Fahrzeugheckanordnung nach einem der vorhergehenden Ansprüche, **dadurch gekennzeichnet, dass** das Karosserieelement (30) ein Spoiler ist.

9. Verfahren zum Montieren einer Fahrzeugheckanordnung (10), die ein hinteres Öffnungselement (20), das um eine Querachse auf einem hinteren Teil des Fahrzeugs schwenkbar gelagert ist, und ein Karosserieelement (30), das dazu gedacht ist, das hintere Öffnungselement (20) teilweise zu bedecken, aufweist, wobei das Verfahren eine Montageposition und eine montierte Position des Karosserieelements (30) an dem hinteren Öffnungselement (20) umfasst, **dadurch gekennzeichnet, dass** es einen Schritt des Befestigens des Karosserieelements (30) an dem hinteren Öffnungselement (20) durch Verschwenken des Elements (30) von der Montageposition in eine Zwischenposition, durch Gleiten des Elements (30) von der Zwischenposition in die montierte Position an dem hinteren Öffnungselement (20) und dann durch Einrasten des Karosserieelements (30) an dem hinteren Öffnungselement (20) umfasst, um das Karosserieelement (30) an dem hinteren Öffnungselement (20) in seiner montierten Position zu befestigen.
